# EUROPEAN PATENT APPLICATION

(11) **EP 2 827 435 A1**
(43) Date of publication of application: **21.01.2015**
(21) Application number: 13177187.5
(22) Date of filing: 19.07.2013
(51) Int. Cl.: H01M 10/44, H01M 16/00, H02J 7/00

(54) **Energy converter**

(71) Applicant: Bleiner, Thomas, 6830 Chiasso (CH)
(72) Inventor: Bleiner, Thomas, 6830 Chiasso (CH)
(74) Representative: Leihkauf, Steffen Falk

(57) **Abstract**

An energy converter (1) comprises a rechargeable battery unit (2), an electrolysis unit (3) for producing oxygen and hydrogen by electrolysis, a burner unit (4) suitable to generate heat by the combustion of the produced and mixed oxygen and hydrogen, a thermal-electric converter unit (7) connected in a thermal exchange relationship with the burner unit (4) and suitable to convert the thermal energy generated by the burner unit (4) into power, a battery charger (8) for charging the battery unit (2) by using the power produced by the thermal-electric converter unit (7), a user electric terminal (9) connected to the battery unit (2).

## Description

The present invention relates to an energy converter for providing electric power, particularly in a household setting that is independent from the electrical grid.

Since the provision of power is not to date ensured with a sufficient coverage and at acceptable costs, particularly in rural areas and area remote from the electrical grid, the invention has as it object to provide an energy converter that, by using electrolysis for producing oxyhydrogen, the combustion of the produced oxyhydrogen for generating heat, and the conversion of the generated heat into electric power, in a system that is integrated and widely self-controlled applicable in a household, agricultural, and industrial setting.

This object is achieved by an energy converter, comprising:
- a battery unit with at least one rechargeable battery,
- an electrolysis unit electrically connected to the battery unit and comprising at least one electrolytic cell for the production by electrolysis of oxygen and hydrogen,
- a burner unit connected with the electrolysis unit by a conduction system of the hydrogen and oxygen gases produced, and suitable to generate heat by the combustion of the mixed oxygen and hydrogen,

- a thermal-electric converter unit connected in a thermal exchange relationship with the burner unit and suitable to convert the heat or the thermal gradient generated by the burner unit into power,
- a battery charger electrically connected to the thermal-electric converter unit and to the battery unit so as to charge the batteries of the battery unit by using the power produced by the thermal-electric converter unit,
- a user electric terminal connected to the battery unit for providing power to the user,
- an electrolyte inlet port connected to the electrolysis unit for loading an electrolyte liquid, particularly water, into the electrolysis unit,
- a vapor exhaust port connected to the burner unit for discharging the combusted gas, particularly water vapor,
- an electronic monitoring and control system connected to the battery unit, the electrolysis unit, and the burner unit, and so configured as to monitor a charging level of the battery unit and to:
   - activating the electrolysis unit when the charging level is less than a lower charging level threshold, and
   - deactivating the electrolysis unit when the charging level is higher than an upper charging level threshold, and
   - activating the burner unit once the electrolysis unit is activated and in the presence of a predetermined minimum amount of oxygen and hydrogen gas in the burner unit, and
   - deactivating the burner unit once the electrolysis unit is deactivated and after exhausting the gas oxygen and hydrogen in the burner unit, and
   - opening a switch in the electric connection between the battery unit and the user electric terminal when the battery charging level is less than a minimum charging level lower than the lower charging level threshold, and
   - closing the switch in the electric connection between the battery unit and the user electric terminal when the battery charging level is higher than the minimum charging level.

This allows converting and generating electric power in a controlled and automatic manner as a function of the charging level of the battery unit, which is therefore capable of providing a power usable by the user and of being automatically recharged when the charge level drops below the lower level.

In accordance with an aspect of the invention, all the functional units: battery unit, electrolysis unit, burner unit, thermal-electric converter unit, battery charger, user electric terminal, electrolyte inlet port, vapor exhaust port, and electronic monitoring system are supported by a single support and holding structure, particularly a cabinet-like housing that may have dimensions of length from 1m to 3m, width from 1m to 3m, and height from 1m to 3m.

This allows an easy positioning and use of the device both in a household setting and in the agricultural and industrial field, both on board of a vehicle (terrestrial, naval, or aerial) or cart for transporting the device and the use thereof with the same vehicle, for example for lighting building sites, etc. The system does not create harmful pollutants, therefore, it can be advantageously used both in indoor and outdoor environments.

In order to better understand the invention and appreciate the advantages thereof, some exemplary, nonlimiting embodiments thereof will be described herein below, with reference to the drawings, in which:

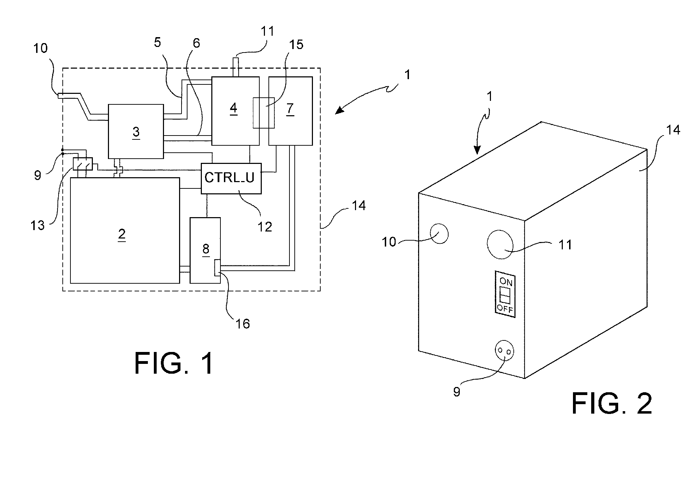

- Fig. 1 is a schematic view of the single functional units of the energy converter according to an embodiment,
- Fig. 2 is a perspective view of the converter according to an embodiment.

With reference to the Figures, an energy converter 1 comprises a battery unit 2 with at least one rechargeable battery, an electrolysis unit 3 electrically connected to the battery unit 2 and comprising at least one electrolytic cell for producing oxygen and hydrogen by electrolysis, a burner unit 4 connected with the electrolysis unit 3 by a conduction system 5, 6 for the hydrogen and oxygen gases produced, and suitable to generate heat by the combustion of the mixed oxygen and hydrogen, a thermal-electric converter unit 7 connected in a thermal exchange relationship with the burner unit 4 and suitable to convert the heat or the thermal gradient generated by the burner unit 4 into power, a battery charger 8 electrically connected to the thermal-electric converter unit 7 and to the battery unit 2 so as to charge the batteries of the battery unit 2 by using the power produced by the thermal-electric converter unit 7.

The device 1 further comprises a user electric terminal 9 connected to the battery unit 2 for providing power to the user, as well as an electrolyte inlet port 10 connected to the electrolysis unit 3 for loading an electrolyte liquid, particularly water, in the electrolysis unit 3, and a vapor exhaust port 11 connected to the burner unit 4 for discharging the combusted gas, particularly water vapor.

The whole process implemented by the converter 1 is controlled by an electronic monitoring and control system 12 (briefly, control system 12) connected to the battery unit 2, the electrolysis unit 3, and the burner unit 4 (but preferably also to the thermal-electric conversion unit 7 and to the battery charger 8), and so configured as to monitor a charging level of the battery unit 2 and to:
- activating the electrolysis unit 3 when the battery charging level is less than a lower charging level threshold, and
- deactivating the electrolysis unit 3 when the battery charging level is higher than an upper charging level threshold, and
- activating the burner unit 4 once the electrolysis unit 3 is activated and in the presence of a predetermined minimum amount of oxygen and hydrogen gas in the burner unit 4, and
- deactivating the burner unit 4 once the electrolysis unit 3 is deactivated and after exhausting the oxygen and hydrogen gas in the burner unit 4, and
- opening a switch 13 in the electric connection between the battery unit 2 and the user electric terminal 9 when the battery charging level is less than a minimum charging level (which is in turn) lower than the lower charging level threshold, and
- closing the switch 13 in the electric connection between the battery unit 2 and the user electric terminal 9 when the battery charging level is higher than the minimum charging level.

This allows converting and generating electric power in a controlled and automatic manner as a function of the charging level of the battery unit, which is therefore capable of providing power usable by the user and of being automatically recharged when the charge level drops below the lower level.
In an advantageous embodiment, the lower charging level threshold ranges between 30% and 60%, preferably 50% of the full charge of the battery unit (2), and the upper charging level threshold ranges between 80% and 100%, preferably 95% of the full charge of the battery unit (2). The minimum charging level may range between 15% and 35%, preferably 25% of the full charge of the battery unit (2).

According to an embodiment, all the functional units of the device 1, i.e.: battery unit 2, electrolysis unit 3, burner unit 4, thermal-electric converter unit 7, battery charger 8, user electric terminal 9, electrolyte inlet port 10, vapor exhaust port 11, and control system 12 are supported by a single support and holding structure 14, particularly a cabinet-shaped housing that may have dimensions of length of 0.3m ... 1.0m ... 3m, width of 0.3m ... 1.0m ... 3m and height 0.3m ... 1.0m ... 3m.

This allows an easy positioning and use of the device 1 both in a household setting and in the agricultural and industrial field, both on board of a vehicle or cart for transporting the device 1 and the use thereof with the same vehicle, for example for lighting building sites, etc. The so-configured device does not generates harmful pollutants, therefore it can be used advantageously both in indoor and outdoor environments.

In accordance with an embodiment, the electrolytic cell(s) of the electrolytic unit may comprise two electrodes in an inert metal (for example, platinum) immersed in an electrolytic solution, particularly water possibly provided with electrolytic salts, and which are connected to the battery unit 2 acting as a current source. The power dissociates the water molecule into OH-and H3O+ ions (and from a very low percentage of free H+ protons, which tend to react with the water molecules to give H3O+ ions). At the cathode, the hydrogen ions (H3O+) acquire electrons in a reduction reaction that leads to the formation of hydrogen gas 2H2O + 2 e- -> H2 + 2 OH-. At the anode, the hydroxide ions (OH-) are subjected to oxidation, releasing electrons 2H2O -> 02 + 4 H+ + 4 e-.

From the sum of the two preceding half-reactions, the following complete reaction 2H2O -> 2 H2 + 02 is obtained.

Consequently, a hydrogen volume almost double of the oxygen volume will form (since according to the perfect gas law the number of moles and the volume are directly proportional), hence, since the hydrogen has the double of the moles and the molar volume of the hydrogen is 11.42 × 10⁻³ m³/mol, while for the oxygen it is 17.36 × 10⁻³ m³/mol, then for the hydrogen there is almost the double of the volume of the oxygen.

In accordance with an embodiment, the electrolytic unit may be configured as the well-known Brown's electrolyzer with the electrolytic cells arranged adjacent one to the other in a common electrolytic chamber to form a single unit in which there are a number of electrodes in series. The electrolytic chamber is provided with a space for the collection of the gases and a gas outlet connected to the gas conduit or to the gas conduits 5, 6 for the connection to the burner unit 4. In this case, it would be sufficient to connect the battery unit 2 only to the terminal electrodes, making so that the electrolytic unit 3 is implementable in a very efficient and compact manner.

According to an embodiment, the burner unit 4 in connection with a heat exchanger 15 is adapted to a combustion with a blowtorch ad water. Such type of burner is *per se* well known and, therefore, it is not described in detail herein.

The oxyhydrogen combusted in the burner unit 4 is a of hydrogen and oxygen mixture in the atomic proportion of 2 a 1, the same as the water and exactly as generated in the electrolysis unit 3.

At a normal temperature and pressure, the flammability range of the oxyhydrogen extends between 4% and 94% by volume in hydrogen with a flame at a temperature of about 2000 °C. The oxyhydrogen burns, converting into water vapor and releasing the energy that supports the reaction, when it is brought to its self-ignition temperature. For a stoichiometric mixture at a normal atmospheric pressure, this temperature is about 580 °C. The energy minimum energy required to ignite such mixture with a spark is about 0.02 millijoules, and it may be provided in the form of an electric spark or of a heating of an electric resistor, driven by the control system 12. The amount of heat developed during the combustion of the gas oxyhydrogen gas mixture is about 34.116 calories per gram of combusted hydrogen. Such heat is transmitted, by the heat exchanger 15, to the thermal-electric conversion unit 7. The water vapor, after releasing its heat to the heat exchanger 15, is discharged into the environment through the vapor exhaust port 11.

In accordance with an embodiment, the thermal-electric converter 7 may comprise a Stirling engine for the conversion of the thermal energy absorbed by the heat exchanger 15 in a cyclic motion (mechanical energy) of an output member, and an alternator that converts, by electromagnetic induction, the mechanical energy of the output member of the Stirling engine into electric power in the form of alternating current.

In accordance with a further embodiment, the thermal-electric converter 7 may comprise an external combustion engine with a thermal-regenerative Rankine cycle of the "Cyclone Engine" type developed and marketed by Cyclone Power Technologies ®, and an alternator that converts, by electromagnetic induction, the mechanical energy of the output member of the "Cyclone Engine" engine into electric power in the form of alternating current.

The same "Cyclone Engine" engine comprises three main components, the vapor generator, the piston unit, and a capacitor. The working fluid, that is deionized water, continuously travels through these three components. From the vapor generator that vaporizes the working fluid, it moves to the pistons, then to the capacitor, from which the condensed fluid returns to the vapor generator.

The vapor generator comprises a water tube coil (composing the heat exchanger 15), surrounded by one or more burners of the burner unit 4, and covered by a thermal-insulating casing. Each burner of the burner unit 4 may comprise a conveyor of the oxyhydrogen gas into the combustion chamber, and an ignitor driven by the control system 12. Advantageously, the oxyhydrogen gas conveyor is configured so that the flame front is tangent to the water tube coil.

The piston unit comprises a preferably equal number of pistons arranged radially about a single driving crank shaft. The pistons engage the crank shaft and an inlet valve is associated to each piston, actuated by a cam that is connected or formed by the driving shaft, to allow the inlet of supercritical water into the cylinder of the corresponding piston. When the supercritical water enters the cylinder, it expands in the form of vapor and pushes the piston inwardly, thus rotating the drive shaft.

When the piston is pushed inwardly, it uncovers discharge ports in the in the cylinder wall, and the supercritical water, after releasing enough energy through its expansion, is in a vapor state and passes through the uncovered discharge ports and along regenerative heating coils. The heat from the discharge vapor is used to pre-heat the water in the regenerative coils before it enters the vapor generator. The vapor, in turn, then passes to the capacitor.

The capacitor may comprise a stack of interleaved circular plates, with an open central space containing a rotor and a condensate well. The vapor enters the upper part of the capacitor from the piston unit, and it is conveyed by the rotor on the sides of the capacitor and in the leaves of the circular plates. A blower circulates air about the outer part of the interleaved plates to efficiently condensate the discharge vapor, which falls into the condensate well at the capacitor bottom. A highpressure pump pumps the condensate from the condensates condensate well, through the regenerative heating coils about the cylinder, and again into the vapor generator.

The device 1 may further comprise a cooling circuit 17 associated to the and for the active cooling of the "cold side" of the thermal-electric converter 7. Such a cooling circuit 17 is connectable to an external appliance, for example, a heating or conditioning system, in order to exploit the heat extracted from the thermal-electric converter 7.

The battery charger 8, not described in detail herein, uses the alternating power produced by the thermal-electric conversion unit 7 and converted into direct current by a rectifier 16, for charging the battery unit 2.

The user electric terminal 9 may be connected to the electrical grid to supply electric power into the electrical grid as a decentralized electric power supplier.

The whole device may be turned on and off by an "ON-OFF" switch that is connected to the control system 12.

The control system 12 preferably comprises a microprocessor with a memory and its own long-duration and rechargeable battery by the power provided by the battery unit 2.

In the case of a complete exhaustion of the batteries of the battery unit 2, the device is not capable of restart the current generation cycle, and it requires a charge of the battery unit 2 by an external energy source.

Furthermore, a particular advantage of the invention is the fact that, by virtue of the at least partial energy recovery that may be obtained with the described system, also the discharging of the battery unit 2 is slowed down when the power is not used by the user.

It shall be apparent that to the energy converter according to the present invention, those of ordinary skill in the art, in order to meet contingent, specific needs, will be able to make further modifications and variations, all of which anyhow fall within the protection scope of the invention, as defined by the following claims.

## Claims

1. An energy converter (1), comprising:
- a battery unit (2) with at least one rechargeable battery,
- an electrolysis unit (3) electrically connected to the battery unit (2) and comprising at least one electrolytic cell for producing oxygen and hydrogen by electrolysis,
- a burner unit (4) connected with the electrolysis unit (3) by a conduction system (5, 6) of the hydrogen and oxygen gases that are produced, and suitable to generate heat by the combustion of the mixed oxygen and hydrogen,
- a thermal-electric converter unit (7) connected in a thermal exchange relationship with the burner unit (4) and suitable to convert the thermal energy generated by the burner unit (4) into electrical power,
- a battery charger (8) electrically connected to the thermal-electric converter unit (7) and to the battery unit (2) so as to charge the batteries of the battery unit (2) by using the electrical power produced by the thermal-electric converter unit (7),
- a user electric terminal (9) connected to the battery unit (2) for providing power to the user,
- an electrolyte inlet port (10) connected to the electrolysis unit (3) for loading an electrolyte liquid, particularly water, into the electrolysis unit (3),
- a vapor exhaust port (11) connected to the burner unit (4) for discharging the combusted gas, particularly water vapor.

2. The energy converter (1) according to claim 1, comprising an electronic monitoring and control system (12) connected to the battery unit (2), to the electrolysis unit (3), and to the burner unit (4) and so configured as to monitor a charging level of the battery unit (2) and to:
- activating the electrolysis unit (3) when the battery charging level is less than a lower charging level threshold, and
- deactivating the electrolysis unit (3) when the battery charging level is higher than an upper charging level threshold.

3. The energy converter (1) according to claim 2, wherein the lower charging level threshold ranges between 30% and 60%, preferably 50% of the full charge of the battery unit (2), and the upper charging level threshold ranges between 80% and 100%, preferably 95% of the full charge of the battery unit (2).

4. The energy converter (1) according to claim 2 or 3, wherein the electronic monitoring and control system (12) is configured so as to:
- activate the burner unit (4) once the electrolysis unit (3) is activated and in the presence of a predetermined minimum amount of oxygen and hydrogen gas in the burner unit (4), and
- deactivate the burner unit (4) once the electrolysis unit (3) is deactivated and after exhausting the oxygen and hydrogen gas in the burner unit (4).

5. The energy converter (1) according to claim 2, 3, or 4, wherein the electronic monitoring and control system (12) is configured so as to:
- open a switch (13) in the electric connection between the battery unit (2) and the user electric terminal (9) when the battery charging level is less than a minimum charging level lower than the lower charging level threshold, and
- close the switch (13) in the electric connection between the battery unit (2) and the user electric terminal (9) when the battery charging level is higher than the minimum charging level.

6. The energy converter (1) according to claim 5, wherein the minimum charging level ranges between 15% and 35%, preferably 25% of the full charge of the battery unit (2).

7. The energy converter (1) according to any of the preceding claims, wherein the functional units of the device (1): battery unit (2), electrolysis unit (3),
burner unit (4), thermal-electric converter unit (7), battery charger (8), user electric terminal (9), electrolyte inlet port (10), vapor exhaust port (11), control system (12) are received in a single support and holding structure (14).

8. The energy converter (1) according to claim 7, wherein said support and holding structure (14) is composed of a cabinet-shaped housing with dimensions of length of 0.3m ... 1.0m ... 3m, width of 0.3m ... 1.0m ... 3m and height of 0.3m ... 1.0m ... 3m.

9. The energy converter (1) according to one of the preceding claims, mounted on board of a vehicle or cart for transporting the converter (1).

10. The energy converter (1) according to one of the preceding claims, wherein the thermal-electric converter (7) comprises a Stirling engine for the conversion of the thermal energy generated by the burner unit (4) in a cyclic motion of an output member, and an alternator that converts, by electromagnetic induction, the mechanical energy of the output member of the Stirling engine into electric power in the form of alternating current.

11. The energy converter (1) according to one of the preceding claims, wherein the thermal-electric converter (7) comprises an external combustion engine with a thermal-regenerative Rankine cycle of the "Cyclone Engine" type for the conversion of the thermal energy generated by the burner unit (4) into a cyclic motion of an output member, and an alternator that converts, by electromagnetic induction, the mechanical energy of the output member into electric power in the form of alternating current.

12. The energy converter (1) according to one of the preceding claims, wherein the battery charger (8) is so configured as to charge the battery unit (2), by using the alternating power produced by the thermal-electric conversion unit (7) and converted into a direct current by a rectifier (16).

13. The energy converter (1) according to one of the claims 2 to 12, wherein the control system (12) comprises a microprocessor with a memory and its own long-duration battery and that is rechargeable by the power provided by the battery unit (2).
